# FASCICULE DE BREVET EUROPEEN

(11) **EP 3 475 581 B1**
(45) Date de publication et mention de la délivrance du brevet: **01.04.2020**
(21) Numéro de dépôt: 17737343.8
(22) Date de dépôt: 22.06.2017
(51) Int. Cl.: F04D 29/32, F01D 11/00, F01D 21/04, F01D 5/06, F04D 29/02, F01D 5/22, F01D 5/28, B64C 11/14, F02C 7/04

(54) **ANNEAU DE CARÉNAGE DE MOYEU DE ROUE À AUBES DE TURBINE À GAZ, LEDIT ANNEAU ÉTANT PLASTIQUEMENT DÉFORMABLE**
GASTURBINEN-LAUFRAD-NABEN-VERKLEIDUNGSRING, DAS PLASTISCH VERFORMBAR IST
GAS TURBINE IMPELLER HUB FAIRING RING THAT IS PLASTICALLY DEFORMABLE

(30) Priorité: 22.06.2016 FR 1655799
(43) Date de publication de la demande: 01.05.2019
(73) Titulaire: Safran Aircraft Engines, 75015 Paris (FR)
(72) Inventeur: DE GAILLARD, Thomas, Alain, 77550 Moissy-Cramayel (FR); BOISSON, Alexandre, Bernard, Marie, 77550 Moissy-Cramayel (FR); FIGEUREU, Claire, Marie, 77550 Moissy-Cramayel (FR)
(74) Mandataire: Cabinet Beau de Loménie
(86) Numéro de dépôt international: PCT/FR2017/051662
(87) Numéro de publication internationale: WO 2017/220940

(56) Documents cités:
- FR-A1- 2 918 409
- FR-A1- 3 010 442
- US-A1- 2011 037 233

## Description

### DOMAINE DE L'INVENTION

L'invention concerne un anneau de carénage de roue à aubes, une roue à aubes équipée d'un tel anneau de carénage, et une turbomachine équipée d'une telle roue à aubes. En particulier, la roue à aubes peut être une soufflante de turboréacteur, mais pas uniquement.

### ETAT DE LA TECHNIQUE ANTERIEURE

Les structures pour délimiter de manière étanche la veine des gaz (i.e. le passage pour les gaz) en pied d'aube au sein d'une roue à aubes comprennent généralement une plateforme inter-aubes et un joint porté par chaque plateforme et en contact avec l'aube, notamment en bord d'attaque et bord de fuite des aubes. Une telle structure est décrite dans le document FR 2 987 086.

Toutefois, l'étanchéité au niveau du bord d'attaque et/ou du bord de fuite des aubes, où la géométrie est particulièrement complexe, reste perfectible. Il existe donc un besoin en ce sens.

FR 2 918 409 divulgue un anneau de carénage selon le préambule de la revendication 1. US 2011/037233 divulgue un assemblage d'étanchéité. FR 3 010 442 divulgue un disque aubage monobloc à contraintes réduite en pied d'aube, de préférence pour soufflante de turbomachine d'aéronef.

### PRESENTATION DE L'INVENTION

Un mode de réalisation concerne un anneau de carénage de roue à aubes tel que défini par la revendication 1, comprenant une paroi annulaire s'étendant axialement, ladite paroi présentant une pluralité d'encoches s'étendant axialement, chaque encoche étant configurée pour recevoir un bord d'attaque ou un bord de fuite d'une aube.

Par « s'étend axialement » on entend bien entendu que l'élément en question s'étend strictement parallèlement à la direction axiale, ou bien en faisant un angle inférieure à 45° avec la direction axiale. Ainsi, au sens du présent exposé, une paroi annulaire tronconique s'étend axialement.

On comprend que l'anneau s'étend selon une direction axiale, une direction radiale et une direction circonférentielle. De manière générale, la direction axiale correspond à la direction de l'axe de rotation de la roue à aubes (ou direction de l'axe de l'anneau de carénage), et une direction radiale est une direction perpendiculaire à la direction axiale. La direction circonférentielle correspond à la direction décrivant un anneau autour de la direction axiale. Les trois directions axiale, radiale et circonférentielle correspondent respectivement aux directions définies par la côte, le rayon et l'angle dans un système de coordonnées cylindrique.

On comprend également que les encoches sont toutes disposées du même côté de l'anneau considéré selon la direction axiale.

Ainsi, en disposant l'anneau autour des bords d'attaques ou de fuites des aubes d'une roue à aubes en logeant chaque bord d'attaque ou de fuite dans une encoche, on délimite de manière fiable un passage de gaz sans fuite possible entre chaque aube et l'anneau de carénage, respectivement en entrée ou sortie de la roue à aubes. Bien entendu, les bords d'attaques des aubes sont disposés du côté de l'entrée (ou amont) de la roue à aubes tandis que les bords de fuites des aubes sont disposés du côté de la sortie (ou aval) de la roue à aubes.

Dans certains modes de réalisation, chaque encoche présente une forme de profil de bord d'attaque ou de bord de fuite d'une aube.

Une telle forme d'encoche permet à l'anneau d'épouser au mieux la forme des aubes, grâce à quoi l'étanchéité est améliorée.

Les parties inter-encoches sont en matériau composite tandis que le reste de l'anneau est en matériau métallique.

Un matériau composite est un assemblage d'au moins deux matériaux différents non miscibles, tandis qu'un matériau métallique est un métal ou un alliage à base de métal.

Les parties inter-encoches sont bien entendu les parties de l'anneau qui s'étendent entre deux encoches adjacentes. Par exemple, les parties inter-encoches sont en mousse de polyuréthane ou en structure en nid d'abeilles avec un corps alvéolé en aluminium ou en poly(m-phénylèneisophtalamide) (également connu sous le nom commercial générique Nomex®) recouvert d'une couche (ou peau) métallique (par exemple en titane ou en l'aluminium) ou composite en fibres de carbone. Par exemple le reste de l'anneau est en titane ou en aluminium.

Lorsqu'une aube se déforme, par exemple en cas d'ingestion d'un élément solide (par exemple un oiseau), elle peut venir en contact contre une partie inter-encoches et déformer cette partie inter-encoches selon la direction circonférentielle. Ce contact permet de soulager l'aube et de limiter les déflexions de celle-ci limitant ainsi les endommagements possibles dans l'aube. De plus, pour les événements les plus critiques tels que l'ingestion d'oiseau lourd ou une perte d'aube, le contact n'est pas suffisant pour limiter les endommagements dans l'aube. Dans ce cas, permettre des déformations plastiques des parties inter-encoche assure une dissipation d'énergie de la pale vers les parties inter-encoches limitant ainsi les endommagements de l'aube. Une telle combinaison de matériau composite pour les parties inter-encoches et métallique pour le reste de l'anneau permet au concepteur d'ajuster avec précision le seuil de contraintes à partir duquel les parties inter-encoches se déforment plastiquement (i.e. le seuil de plasticité).

Dans certains modes de réalisation, chaque partie inter-encoches est configurée pour se déformer plastiquement lorsqu'elle est soumise à une force circonférentielle supérieure ou égale à 40 kN ±30%(quarante kilo-Newtons plus ou moins trente pourcents).

On s'assure ainsi qu'au-delà d'un déplacement imposé prédéterminé, générant une telle force circonférentielle, la partie inter-encoches adjacente à une aube qui se déforme avec une grande amplitude se déforme plastiquement. Ceci permet à cette partie inter-encoches d'assurer une fonction de dissipateur d'énergie, grâce à quoi on dissipe de l'énergie issue de la déformation de l'aube et on limite l'amplitude de déformation de l'aube. On limite ainsi la propagation des déformations au sein de l'aube.

Dans certains modes de réalisation, l'anneau de carénage comprend au moins une partie d'usure configurée pour être disposée en vis-à-vis d'une aube.

On comprend qu'une partie d'usure est une partie configurée pour s'user au bénéfice d'une autre partie en contact, dans le cas présent une aube. Bien entendu, une partie d'usure est généralement montée de manière amovible de manière à pouvoir être remplacée lorsque l'usure de ladite partie d'usure est trop importante. Par exemple, un joint peut former une partie d'usure.

Par exemple, les surfaces de l'anneau délimitant les encoches sont équipées d'une partie d'usure. Grâce à une telle partie d'usure, on peut monter l'anneau de carénage en contact avec le bord d'attaque ou de fuite des aubes, grâce à quoi l'étanchéité est maximale, tandis que la partie d'usure assure, en s'usant à l'usage, l'intégrité des aubes.

Dans certains modes de réalisation, l'anneau de carénage comprend une paroi annulaire s'étendant radialement configurée pour monter ledit anneau de carénage sur un disque de roue à aubes.

Une telle paroi annulaire radiale permet de déporter tous les moyens de montages de l'anneau de carénage sur une roue à aubes, par exemple les trous, taraudages, crochets, etc., sur une partie de l'anneau qui n'est pas destiné à délimiter un passage de gaz. Ceci permet d'assurer une meilleure étanchéité.

Dans certains modes de réalisation, l'anneau de carénage est configuré pour être équipé d'un cône d'entrée ou de sortie de roue à aubes.

Un tel cône d'entrée ou de sortie de roue à aubes permet de guider le flux de gaz en entrée ou sortie de la roue.

Un mode de réalisation concerne également une roue à aubes équipée d'au moins un anneau de carénage selon l'un quelconque des modes de réalisation décrits dans le présent exposé.

Par exemple la roue à aubes comprend un disque à la périphérie duquel sont montées une pluralité d'aubes, et une pluralité de plateformes inter-aubes, les plateformes inter-aubes étant configurées pour laisser le bord d'attaque et/ou le bord de fuite des aubes libre. Ainsi, l'anneau de carénage épouse les bords d'attaques et/ou les bords de fuites (la roue à aubes pouvant comprendre un unique anneau de carénage disposé à l'entrée ou à la sortie de la roue, ou bien deux anneaux de carénage, un disposé à l'entrée et l'autre à la sortie de la roue). Ainsi, les bords d'attaques et/ou de fuites sont logés dans les encoches de l'anneau tandis que l'extrémité axiale des parties inter-encoches de l'anneau coopère avec l'extrémité axiale correspondante des plateformes inter-aubes.

Dans certains modes de réalisation, les parties inter-encoches de l'anneau de carénage s'étendent sur maximum 15% de la longueur axiale des aubes.

La longueur des aubes est mesurée en projection selon la direction axiale. En configurant les encoches pour que les aubes soient reçues sur 15% de leur longueur depuis leur bord d'attaque ou de fuite, on s'assure que l'anneau de carénage couvre les parties des aubes présentant la géométrie la plus complexe et la plus difficile pour assurer l'étanchéité. Une telle configuration permet ainsi d'optimiser l'étanchéité entre les aubes et l'anneau de carénage.

Un mode de réalisation concerne également une turbomachine équipée d'une roue à aubes selon l'un quelconque des modes de réalisations décrits dans le présent exposé.

De telles roues à aubes sont particulièrement bien adaptées pour une mise en œuvre au sein d'une turbomachine. Par exemple, un mode de réalisation concerne un turboréacteur tandis que ladite roue à aubes forme la soufflante dudit turboréacteur.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- la figure 1 représente un turboréacteur présentant une soufflante,
- la figure 2 représente un anneau de carénage équipant la soufflante du turboréacteur de la figure 1,
- la figure 3 représente une vue partielle en perspective de la soufflante du turboréacteur de la figure 1 équipée de l'anneau de carénage de la figure 2, et
- la figure 4 représente une vue de côté de la soufflante partiellement assemblée.

### DESCRIPTION DETAILLEE D'EXEMPLES DE REALISATION

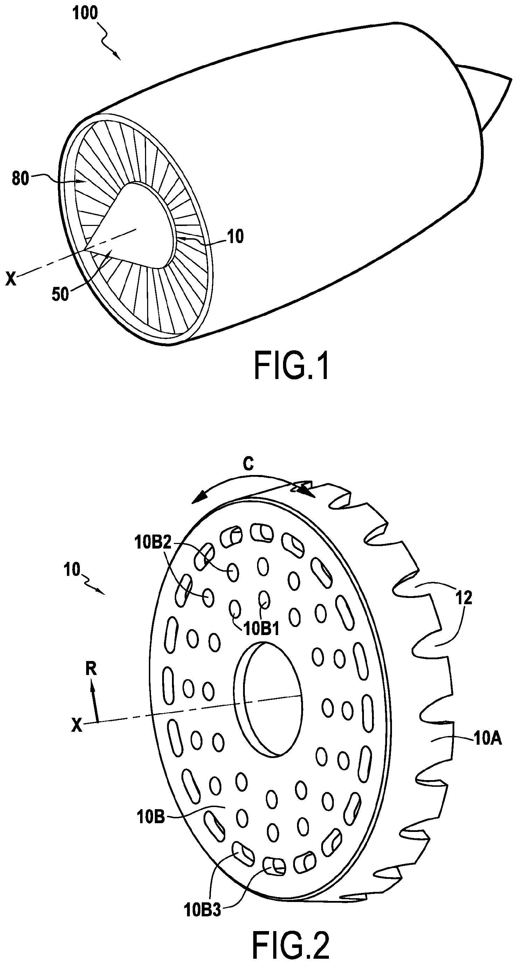

La figure 1 représente une turbomachine 100, dans cet exemple un turboréacteur 100, comprenant roue à aube 80, dans cet exemple une soufflante 80, équipée, en entrée, d'un anneau de carénage 10 sur lequel est monté un cône d'entrée 50.

L'anneau de carénage 10 s'étend selon une direction axiale X, une direction radiale R et une direction circonférentielle C. L'anneau 10 présente une paroi annulaire 10A s'étendant axialement (ou paroi axiale 10A) dans laquelle est ménagée une pluralité d'encoches 12. L'anneau 10 présente également une paroi annulaire 10B s'étendant radialement (ou paroi radiale 10B). Bien entendu, la paroi axiale 10A peut former un angle compris entre 0° et 45° avec la direction axiale X tandis que la paroi radiale 10B peut faire un angle compris entre 45° et 90° avec la direction axiale X.

La paroi radiale 10B présente une première série de trous de fixation 10B1 pour fixer l'anneau 10 au disque de la soufflante 80. La paroi radiale 10B présente une deuxième série de trous de fixation 10B2 pour fixer le cône 50 sur l'anneau 10. Enfin, la paroi radiale 10B présente une troisième série de trous oblongs 10B3. Ces trous 10B3 sont ménagés pour alléger l'anneau 10.

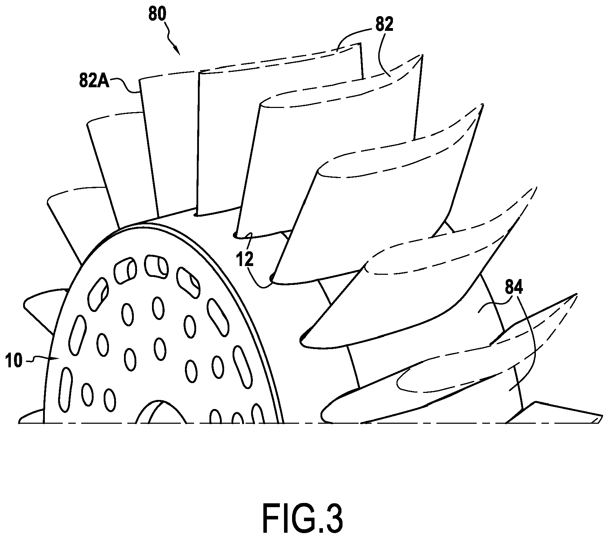

Les encoches 12 sont toutes ménagées du même côté de l'anneau 10 selon la direction axiale X. Chaque encoche 12 présente la forme du profil du bord d'attaque 82A des aubes 82 de la soufflante 80. Comme cela est visible sur la figure 3, chaque encoche 12 reçoit un bord d'attaque 82A d'une aube 82.

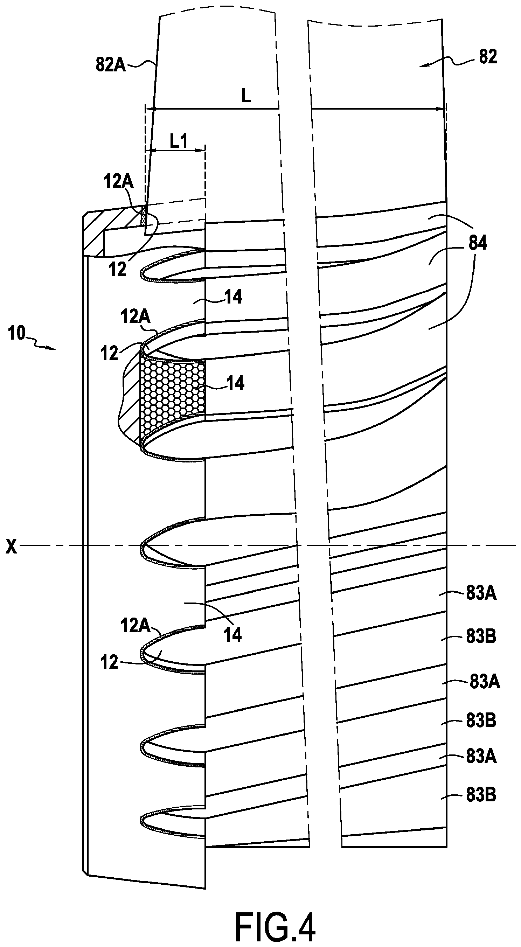

Comme cela est représenté sur la figure 4, l'anneau de carénage 10 est monté sur un disque 83 de la soufflante 80, à la périphérie duquel sont montées les aubes 82, ces aubes 82 étant insérées dans les rainures 83A configurées pour recevoir les pieds des aubes 82, et des plateformes inter-aubes 84, ces plateformes inter-aubes 84 étant montées sur les dents 83B du disque 83.

Dans cet exemple, l'anneau de carénage 10 coopère axialement en contact avec les plateformes inter-aubes 84 de manière à délimiter de manière continue un passage de gaz entre les aubes 82, au niveau du pied des aubes 82. Plus particulièrement, dans cet exemple, les parties de la paroi 10A de l'anneau 10 s'étendant entre les encoches 12 forment des parties inter-encoches 14 tandis que l'extrémité axiale de parties inter-encoches 14 est en contact avec l'extrémité axiale en regard des plateformes inter-aubes 84.

La longueur axiale L1 des parties inter-encoches 14 est dans cet exemple d'environ 8% de la longueur axiale L des aubes 82. Ainsi, de manière générale, les parties inter-encoches 14 s'étendent sur maximum 15% de la longueur axiale L des aubes 82.

Par ailleurs, les surfaces des parties inter-encoches 14 délimitant chacune de encoches 12, ces surfaces étant disposées en vis-à-vis des aubes 82, et plus particulièrement du bord d'attaque 82A des aubes 82, présentent une partie d'usure 12A en contact avec les aubes 82.

Comme cela est visible sur la partie inter-encoches 14 représentée en écorché, chaque partie inter-encoches 14 présente une structure interne en nid d'abeilles en poly(m-phénylèneisophtalamide), recouverte d'un revêtement métallique dans cet exemple du titane. Les reste de l'anneau 10 est en métal, dans cet exemple en titane.

Bien que la présente invention ait été décrite en se référant à des exemples de réalisation spécifiques, il est évident que des modifications et des changements peuvent être effectués sur ces exemples sans sortir de la portée générale de l'invention qui est définie par les revendications. En particulier, la description et les dessins doivent être considérés dans un sens illustratif plutôt que restrictif.

## Revendications

1. Anneau de carénage (10) de roue à aubes (80), comprenant une paroi annulaire (10A) s'étendant axialement, ladite paroi (10A) présentant une pluralité d'encoches (12) s'étendant axialement, chaque encoche (12) étant configurée pour recevoir un bord d'attaque (82A) ou un bord de fuite d'une aube (82), **caractérisé en ce que** les parties inter-encoches (14) sont en matériau composite, un matériau composite étant un assemblage d'au moins deux matériaux différents non miscibles, tandis que le reste de l'anneau (10) est en matériau métallique, un matériau métallique étant un métal ou un alliage à base de métal.

2. Anneau de carénage (10) selon la revendication 1, dans lequel chaque encoche (12) présente une forme de profil de bord d'attaque (82A) ou de bord de fuite d'une aube (82).

3. Anneau de carénage (10) selon la revendication 1 ou 2, dans lequel chaque partie inter-encoches (14) est configurée pour se déformer plastiquement lorsqu'elle est soumise à une force circonférentielle supérieure ou égale à 40 kN ±30%.

4. Anneau de carénage (10) selon l'une quelconque des revendications 1 à 3, comprenant au moins une partie d'usure (12A) configurée pour être disposée en vis-à-vis d'une aube (82).

5. Anneau de carénage (10) selon l'une quelconque des revendications 1 à 4, comprenant une paroi annulaire (10B) s'étendant radialement configurée pour monter ledit anneau de carénage sur un disque (83) de roue à aubes (80).

6. Anneau de carénage (10) selon l'une quelconque des revendications 1 à 5, configuré pour être équipé d'un cône (50) d'entrée ou de sortie de roue à aubes (80).

7. Roue à aubes (80) équipée d'un anneau de carénage (10) selon l'une quelconque des revendications 1 à 6.

8. Roue à aubes (80) selon la revendication 7, dans laquelle les parties inter-encoches (12) de l'anneau de carénage (10) s'étendent sur maximum 15% de la longueur axiale (L) des aubes (82).

9. Turbomachine (100) comprenant une roue à aubes (80) selon la revendication 7 ou 8.

## Patentansprüche

1. Verkleidungsring (10) für Schaufelräder (80), der eine ringförmige Wand (10A) umfasst, die sich axial erstreckt, wobei die Wand (10A) mehrere Aussparungen (12) aufweist, die sich axial erstrecken, wobei jede Aussparung (12) dazu ausgestaltet ist, eine Vorderkante (82A) oder eine Hinterkante einer Schaufel (82) aufzunehmen, **dadurch gekennzeichnet, dass** die Teile (14) zwischen den Aussparungen aus Verbundmaterial bestehen, wobei ein Verbundmaterial ein Zusammenbau von mindestens zwei unterschiedlichen, nicht mischbaren Materialien ist, während der Rest des Rings (10) aus Metallmaterial besteht, wobei ein Metallmaterial ein Metall oder eine Legierung auf Metallbasis ist.

2. Verkleidungsring (10) nach Anspruch 1, wobei jede Aussparung (12) eine Vorderkanten- (82A) oder Hinterkanten-Profilform einer Schaufel (82) aufweist.

3. Verkleidungsring (10) nach Anspruch 1 oder 2, wobei jeder Teil (14) zwischen den Aussparungen dazu ausgestaltet ist, sich plastisch zu verformen, wenn er einer Umfangskraft von größer oder gleich 40 kN ± 30 % ausgesetzt ist.

4. Verkleidungsring (10) nach einem der Ansprüche 1 bis 3, umfassend wenigstens ein Verschleißteil (12A), das dazu ausgestaltet ist, einer Schaufel (82) gegenüberliegend angeordnet zu sein.

5. Verkleidungsring (10) nach einem der Ansprüche 1 bis 4, umfassend eine sich radial erstreckende ringförmige Wand (10B), die dazu ausgestaltet ist, den Verkleidungsring auf einer Scheibe (83) eines Schaufelrades (80) zu montieren.

6. Verkleidungsring (10) nach einem der Ansprüche 1 bis 5, der dazu ausgestaltet ist, mit einem Einlauf- oder Auslaufkonus (50) eines Schaufelrades (80) ausgestattet zu werden.

7. Schaufelrad (80), das mit einem Verkleidungsring (10) nach einem der Ansprüche 1 bis 6 ausgestattet ist.

8. Schaufelrad (80) nach Anspruch 7, wobei die Teile (12) zwischen den Aussparungen des Verkleidungsrings (10) sich über höchstens 15 % der axialen Länge (L) der Schaufeln (82) erstrecken.

9. Turbomaschine (100), die ein Schaufelrad (80) nach Anspruch 7 oder 8 umfasst.

## Claims

1. A fairing ring (10) for a bladed wheel (80), comprising an annular wall (10A) extending axially, said wall (10A) presenting a plurality of notches (12) extending axially, each notch (12) being configured to receive a leading edge (82A) or a trailing edge of a blade (82), **characterized in that** the inter-notch portions (14) are made of composite material, a composite material being an assembly of at least two different materials that are not miscible, while the rest of the ring (10) is made of metal material, a metal material being a metal or a metal-based alloy.

2. A fairing ring (10) according to claim 1, wherein each notch (12) presents the shape of the profile of a leading edge (82A) or of a trailing edge of a blade (82).

3. A fairing ring (10) according to claim 1 or claim 2, wherein each inter-notch portion (14) is configured to deform plastically when subjected to a circumferential force that is greater than or equal to 40 kN ±30%.

4. A fairing ring (10) according to any one of claims 1 to 3, including at least one wear portion (12A) configured to be placed facing a blade (82).

5. A fairing ring (10) according to any one of claims 1 to 4, including an annular wall (10B) extending radially and configured to mount said fairing ring on a disk (83) of the bladed wheel (80).

6. A fairing ring (10) according to any one of claims 1 to 5, configured to be fitted with an inlet or an outlet cone (50) of the bladed wheel (80).

7. A bladed wheel (80) fitted with a fairing ring (10) according to any one of claims 1 to 6.

8. A bladed wheel (80) according to claim 7, wherein the inter-notch portions (12) of the fairing ring (10) extend over not more than 15% of the axial length (L) of the blades (82).

9. A turbomachine (100) including a bladed wheel (80) according to claim 7 or claim 8.
